# EUROPEAN PATENT SPECIFICATION

(11) **EP 0 458 656 B1**
(45) Date of publication and mention of the grant of the patent: **04.09.1996**
(21) Application number: 91304761.9
(22) Date of filing: 24.05.1991
(51) Int. Cl.: G06F 15/80, G11B 7/13, G11B 7/09

(54) **Optical information processing apparatus having a "neuro network" for inducing an error signal**
Optisches Informationsverarbeitungsgerät mit "neuronalem Netzwerk" für Fehlersignalerzeugung
Appareil de traitement d'information avec "réseau neural" pour la production des signaux d'erreur

(30) Priority: 25.05.1990 JP 133901/90
(43) Date of publication of application: 27.11.1991
(73) Proprietor: CANON KABUSHIKI KAISHA, Tokyo (JP)
(72) Inventor: Yamamoto, Masakuni, Ohta-ku, Tokyo (JP)
(74) Representative: Beresford, Keith Denis Lewis

(56) References cited:
- EP-A- 0 270 365
- US-A- 4 965 443

## Description

### BACKGROUND OF THE INVENTION

### Field of the Invention

The present invention relates to an optical information processing apparatus for recording and/or reproducing information on a recording medium such as light disks and light cards and, more particularly to an optical information processing apparatus having at least either a tracking servomechanism or a focusing servomechanism.

### Related Background Art

A track for recording information is formed in the form of a concentric circle or spirally on an information recording medium such as light disks. On a light card, a plurality of tracks are formed in parallel in accordance with its shape. When recording or reproducing information on such a recording medium, focus a light spot on a target track, and allow it to scan the target track while maintaining the focused state.

That is, by means of auto-focusing for focusing the light spot on the target track and auto-tracking control for allowing the light spot to follow up the target track, the information can be recorded on the target track or the information on the target track can be read out.

To perform such an auto-tracking or auto-focusing, detect a change in light distribution of reflected light from the information recording medium or a change in the amount of light itself to determine an amount of change of the spot from the track center position or focused position. Transmit a control signal corresponding to the amount of change to an actuator, a device for shifting an objective lens, in order to shift the objective lens. Then the spot will be returned to the track center position or focused position.

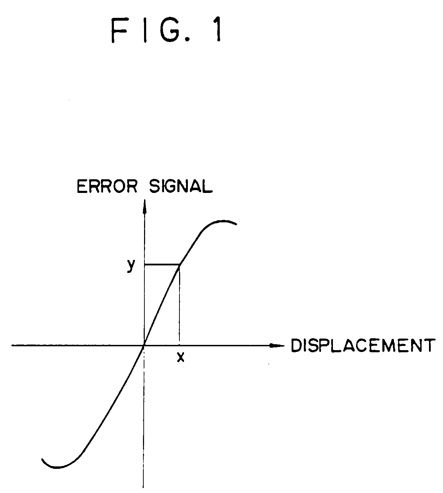

Assuming the change in light distribution or the change in the amount of light itself as an error signal in this case, the change in the error signal to the displacement of the spot is as shown in Fig.1. Fig.1 is generally called "S-shaped curve", and it is required that there should be no offset, that is, the error signal should be 0 when the displacement is 0, and that it should be symmetrical against a + and - change and be preferably linear.

As conventional detection systems for tracking error signals, there are the push-pull method, heterodyne method, etc. Also as detection systems for focusing error signals, the astigmatism method, critical angle method, etc. are known. In any of these systems, reflected light from an information recording medium is guided onto a divided photoelectric conversion element, and an error signal is generated from signals such as a difference, and sum of detection signals obtained from each element.

In the auto-tracking and auto-focusing systems of the above conventional example, however, such an offset as shown in Fig.1 does not exist, but there were the following problems to obtain a center-symmetrical S-shaped curve:
(1) A narrow range of dispersion in characteristic for each of the split photoelectric conversion elements and for each element of electric circuit incidental thereto is requested, and the specification for those parts is severe.
(2) High precision of alignment is requested for each optical system including photoelectric conversion elements.

EP-A-0270365 discloses an apparatus for recording and/or reproducing information by irradiating an optical disc with a converged light beam. The apparatus comprises a light detector for receiving the light beam reflected by the optical disc, and a circuit for producing tracking error signals and focusing error signals on the basis of output signals from the light detector, and servo means for producing tracking and focusing in accordance with the tracking error signals and the focusing error signals.

US-A-4965443 and JP-A-2096707 discloses a method of focusing a lens in a camera. The camera includes a light receiving unit including a two dimensional matrix of photoelectric transducers. Signals from the transducers are input into a neural network to determine the required part of the image to be focused. A multiplexer selects a signal representing the brightness value for the selected area from the output signals of the photoelectric transducers. The apparatus then performs focus detection on the basis of the output of the multiplexer.

### SUMMARY OF THE INVENTION

It is an object of the present invention to solve the above-mentioned problems at issue of prior art, and to provide an optical information processing apparatus capable of performing exact tracking or focusing servo even if there are dispersions in the characteristic of electric elements, of which the apparatus consists, and its adjustment method.

According to the present invention, correct alignment for the optical system is not required when assembling the apparatus.

According to the present invention, there is provided an apparatus for performing at least one of the recording of information and the reproduction of information by irradiating a recording medium with a converged light beam, the apparatus comprising:
a light detector comprising for receiving a light beam transmitted through or reflected by the recording medium;
a circuit for producing at least one of a tracking error signal and a focusing error signal on the basis of the output signals of said plurality of photoelectric conversion elements, and
servo means for performing the function of at least one of a tracking servo and a focusing servo functions in accordance with the error signal induced by said circuit;
the apparatus being characterized in that said circuit includes a neural network arranged to receive the output signals of said plurality of photoelectric conversion elements and arranged to output at least one of the tracking error signal and the focusing error signal, wherein said neural network is arranged to compare said at least one of the tracking error signals and the focusing error signals with an instructor signal representing the desired tracking error or focus error signal and to perform a learning operation so that the compared signals coincide.

A method of adjusting an optical information processing apparatus according to the above-mentioned embodiment, comprising steps of, locating the medium and light beam at specified relative positions, comparing the error signal output from the neural network with the instructor signal, and changing the weight of output for each of a plurality of photoelectric conversion elements in accordance with the comparison result.

### BRIEF DESCRIPTION OF THE DRAWINGS

Fig. 1 is a view showing an example of basic tracking and focusing error signals.

Fig.2 is a schematic diagram showing an optical information processing apparatus according to an embodiment of the present invention.

Fig. 3 is a view showing an example of an input unit used for hand-written character recognition.

Fig. 4 is a block diagram showing an example of a neural network used for hand-written character recognition.

Fig. 5 is a schematic diagram showing a configuration example of an apparatus for allowing an optical information processing apparatus according to the present invention to learn.

Fig.6 is a flow chart of assistance in explaining the process of learning for an optical information processing apparatus according to the present invention.

Figs. 7A and 7B are views showing an example of photoelectric conversion elements used for an optical information processing apparatus according to the present invention.

Fig.8 is a block diagram showing a first configuration example of a neural network used for an optical information processing apparatus according to the present invention.

Fig.9 is a block diagram showing a second configuration example of a neural network used for an optical information processing apparatus according to the present invention.

### DESCRIPTION OF THE PREFERRED EMBODIMENTS

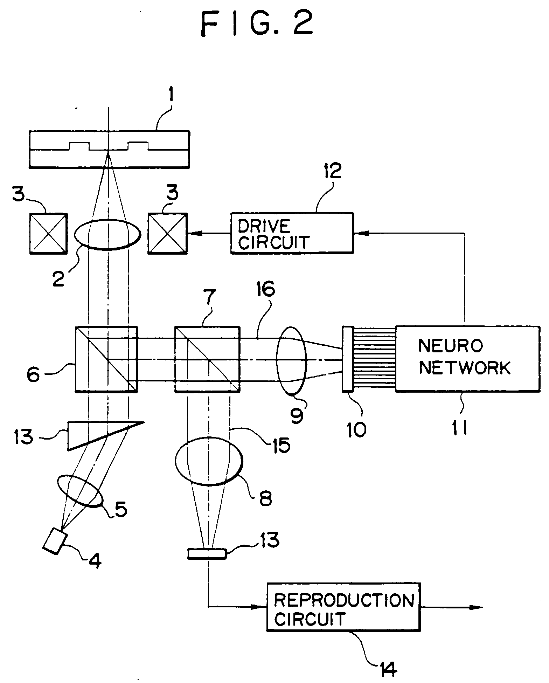

Fig.2 is a block diagram showing an optical information processing apparatus according to an embodiment of the present invention.

In Fig.2, numeral 1 is a recording medium such as a light disk and a light card, and numeral 2 is an objective lens disposed in close proximity to this medium 1. The objective lens 2 is so constructed that it moves in the tracking direction (perpendicular to the optical axis) and in the focusing direction (the optical axis direction) by driving an actuator 3.

Numeral 4 is a semiconductor laser provided as a light source, and light emitted by this laser is first corrected into parallel light flux by a collimater lens 5. The laser light is corrected from elliptic light flux to cylindrical light flux by a shaped beam prism 13 thereafter, and is allowed to fall upon a first beam splitter 6. Then it is narrowed into a minute spot by the objective lens 2, and is irradiated on the recording medium 1.

To record the information, the semiconductor laser 4 is driven in accordance with a recording signal. The track on the recording medium 1 is scanned by the light beam, in which the intensity has been modulated, in accordance with the recording signal. To reproduce the information, the semiconductor laser 4 emits light beam with a specified intensity, and the track, in which the information has been recorded, is scanned by this light beam.

On the other hand, light reflected from the recording medium 1 passes through the objective lens 2 again, and is led to a first beam splitter 6. The first beam splitter 6 separates the incident light from the reflected light, and the reflected light is allowed to fall upon a second beam splitter 7.

The second beam splitter 7 separates the incident light into two. A light flux 15 on the one side, which has been reflected by the beam splitter 7, is converged by a sensor lens 8, and falls upon a light detector 13. A reproduction circuit 14 reproduces the information recorded in the medium from an output signal from this light detector by using a well-known system in reproduction mode.

A light flux 16 on the other side, which has passed through the beam splitter 7, is converged on a multidivided photoelectric conversion element 10 by a converging lens 9. The multidivided photoelectric conversion element 10 is composed of numerous photoelectric conversion elements, and output signals from each element are output to each input cell in the input layer of a neural network 11.

The neural network 11 is a control device for performing tracking and focusing controls based on the output from the multidivided photoelectric conversion element 10 as mentioned in detail later. Therefore, the neural network 11 outputs each error signal for tracking and focusing to a drive circuit 12. The drive circuit 12 drives an actuator 3 in accordance with this error signal to control the position of the objective lens 2. This controls so that the light spot on the recording medium 1 is located at the center of the target track and the focused position is maintained.

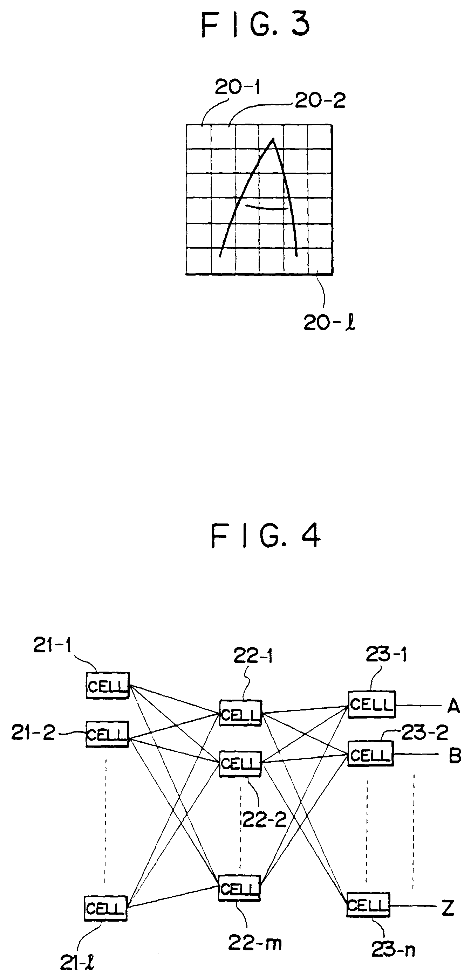

The above-mentioned neural network imitates the human information processing mechanism. Such a neural network called "Back propagation" as shown in Figs. 3 and 4 has been known. The principle of the neural network will be described referring to Figs. 3 and 4 below. Figs. 3 and 4 show examples for recognition of hand-written characters using the neural network.

In Fig.3, 20-1 to 20-ℓ are an input unit which has been divided into 1 pc.s. 21-1 to 21-ℓ shown in Fig.4 are cells called "Input layer", and a signal detected by each element in the input unit is given to each cell, 21-1 to 21-ℓ, in the input layer respectively. Each cell gives a signal with a weight given to each cell, 22-1 to 22-m, called "Intermediate layer", and further each cell in the intermediate layer is given to each cell, 23-1 to 23-n, called "Output layer".

Each cell in the intermediate and output layers is a non-linear element, for example a threshold element which transmits an output signal when the input exceeds a fixed value. The weight of each cell is determined by an operation called "Learning". That is, a weight, which is given to each input signal, is changed from an error in the output against the input in accordance with the learning algorithm. Repeating this operation converges the value of weight so that a correct value is output respectively. Therefore, when the learning is complete, a recognition circuit for hand-written character is formed in the form of a weight of each cell.

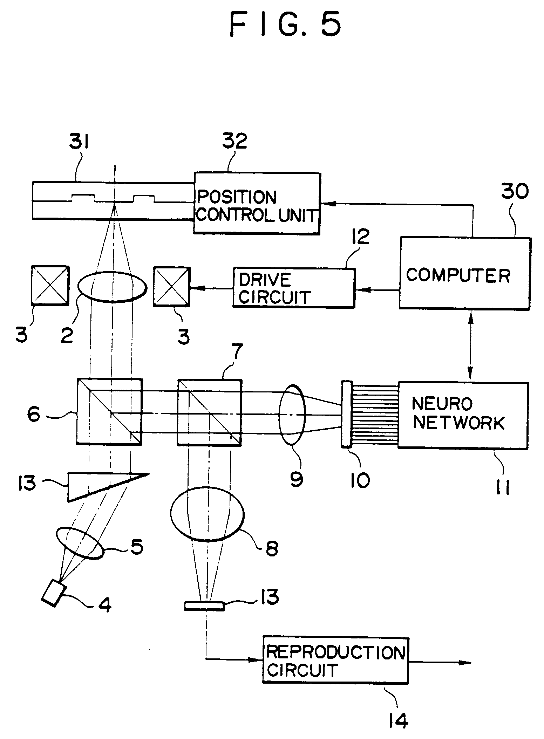

A method of learning for determining the weight of each cell within the neural network 11 will be described. This learning is performed using a device shown in Fig.5 when manufacturing or adjusting a light head. A part of Fig.5 shows the configuration, as it is, of the optical information process in Fig.3 to be adjusted by this device. Accordingly, the same members in Fig.5 as in Fig.3 will be affixed with the same numerals, and the detailed description omitted.

In Fig.5, the learning is automatically performed using a computer 30. The computer 30 is capable of controlling a position control unit 32 for controlling the position of a reference recording medium 31, and a drive circuit 12 for an actuator 3, and of changing the positions of the reference recording medium 31 and the light spot. This enables the computer 30 to freely change the displacement of the light spot from the track center position or the focused position.

The computer 30 also reads a state of the output layer of the neural network 11 to calculate an error between the state and the state of a correct output layer (instructor signal). The computer 30 can successively change the weight of each cell within the neural network 11 in accordance with the error by using a conventional learning algorithm.

For instructor signals for tracking and focusing, determine an ideal S-shaped curve each as an error signal to displacement as shown in Fig.1, and store them in the memory within the computer 30 beforehand.

For the method of learning, change the weight for one displacement until a correct output can be obtained. Thereafter, successively change the displacement, and change the weight until a correct output each can be obtained at respective displacements.

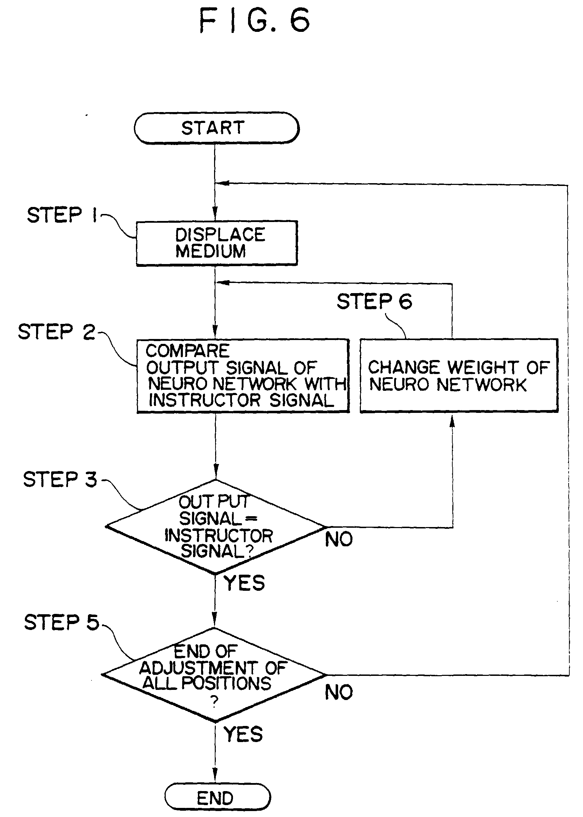

Fig.6 is a flow chart of assistance in explaining the process of learning for such an apparatus according to the present invention. In this example, the reference relative positions for the medium and the light beam have been set at a plurality of places different to each other beforehand.

In step 1, the computer 30 first drives a position control unit 32 to displace the position of the medium in order to establish one of those reference relative positions. Then in step 2, the computer 30 compares the output signal from the neural network 11 with the instructor signal stored in the memory within the computer. As a result of the comparison, when both signals are different in step 3, the neural network changes the weight to be added to the output signal from the light detector in step 6, and returns to step 2. These processes in steps 2, 3 and 6 are repeated until the output signal from the neural network coincides with the instructor signal.

When both signals have coincided in step 3, proceed to step 5 to make sure that the above adjustment has been performed at all of the plurality of set positions. When the adjustment has not been performed at all the positions, return to step 1, and move the medium to the next setting position to repeat the processes in steps 2, 3 and 6 until the output signal from the neural network coincides with the instructor signal.

When it has been judged in step 5 that the adjustment has been performed at all the set positions, complete the learning operation.

As another method, it may be possible to change a round of weights for one displacement, and successively change a round of displacements. In this method, change a round of weights at respective displacements, and repeat this operation until a correct output can be obtained at respective displacements.

The initial value for weight may be given from random number values, or a weight determined by a different method beforehand may be given. By such an operation, the weight is recorded in the memory within the neural network 11 to complete the learning. Since the computer 30 is not required any longer when the learning has been completed, it is removed from the optical information processing apparatus.

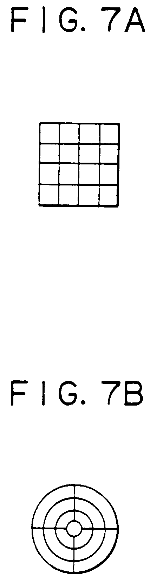

Figs.7A and 7B show an example of a divided surface of the multidivided photoelectric conversion element 10. Fig.7A is an example of square division, and Fig.7B is an example of annular division. The present invention is, of course, not limited these examples, but various modifications are available.

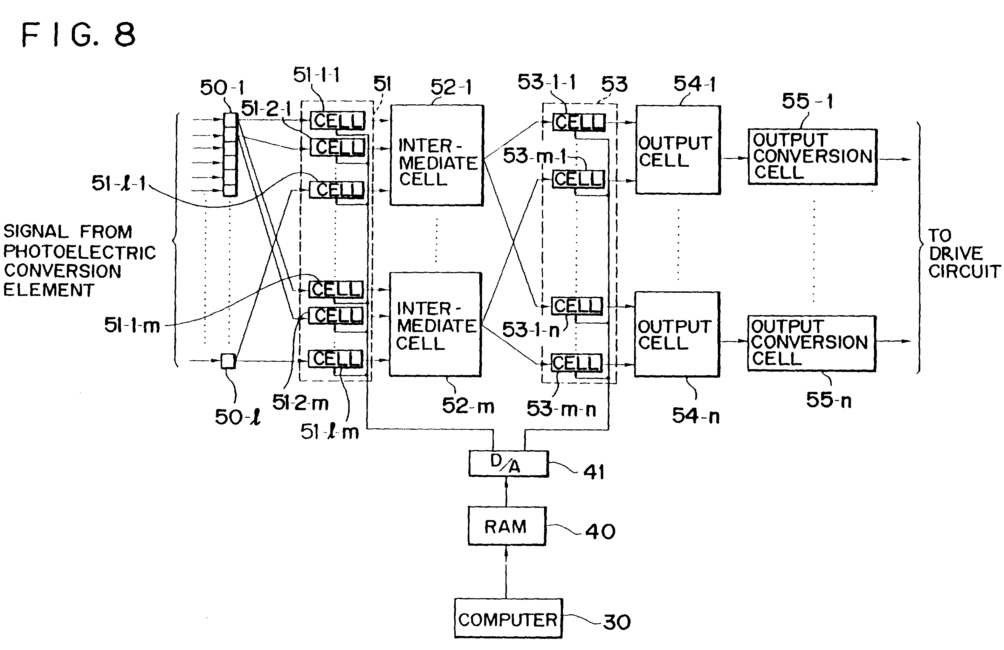

Fig.8 is a concrete example of the neuro network 11 based on the conventional back propagation method. In Fig.8, 50-1 to 50-ℓ are cells in the input layer, and those electric signals are given to ℓ pc.s of input cells 50-1 to 50-ℓ respectively, which have been photoelectrically converted by each element of the multidivided photoelectric conversion element 10 divided into ℓ pc.s.

Numeral 51 is a weight cell, and each of m p'cs of intermediate cells 52-1 to 52-m has ℓ pc.s of weight cells. For example, the output of an input cell 50-1 is divided into m pc.s and each of them is given to weight cells 51-1-1 to 51-1-m. Similarly, the output of input cells 50-2 to 50-ℓ is also divided into m pc.s and each of them is given to the corresponding weight cell. Each weight cell is an amplifier element, and its amplification factor is individually controlled by the computer 30.

For example, the respective amplification factors are stored in a random access memory (RAM) 40 as a digital signal. The stored values are converted into analog signal by a digital/analog (D/A) converter 41 and are input into each weight cell. In this case, the computer 30 can rewrite the values stored in the RAM 40.

Each weight cell comprises an amplifier, a plurality of different load resistances, and an electronic switch which selectively connects these load resistances to the amplifier. Each weight cell switches the electronic switch in accordance with an input signal, and changes the amplification factor by changing the load resistance value. That is, the computer 30 controls through the RAM 40 so that an appropriate weight is applied to a signal to be output from the weight cell.

The signal, to which a weight has been applied by each weight cell, is input into the intermediate cell. For example, the output signal for weight cells 51-1-1 to 51-ℓ-1 is input into an intermediate cell 52-1. Each intermediate cell is a non-linear element which adds for a positive input signal, subtracts for a negative signal, and outputs an output signal when the total value exceeds a certain threshold value.

53-1-1 to 53-m-n are weight cells like 51-1-1 to 51-ℓ-m, and each of n pc.s of output cells has m pc.s of weight cells. For example, the output of an intermediate cell 52-1 is divided into n pc.s, and each of them is given to each weight cell corresponding thereto. Similarly, the output of each of other intermediate cells is also separated into n pc.s, and is given to each of the weight cells corresponding thereto. Weight cells 53-1-1 to 53-m-n are amplification elements like weight cells 51-1-1 to 51-ℓ-m, and its amplification factor is controlled by the computer 30 in the same manner as the above.

The signal, to which a weight has been applied by each weight cell 53-1-1 to 53-m-n, is input into output cells 54-1 to 54-n. For example, the signal for weight cells 53-1-1 to 53-m-1 is input into an output cell 54-1. Each output cell consists of the non-linear element, which adds for a positive input signal, subtracts for a negative input signal, and outputs an output signal when the total value exceeds a certain threshold value in the same way as the above-mentioned intermediate cell.

The output signal from each of these output cells is given to output conversion cells 55-1 to 55-n corresponding respectively. Each output cell is a cell which corresponds to the displacement of the respectively determined light spots, and the output conversion cell converts the output signal from the output cell into an error signal corresponding to the respective displacment.

For example, an output cell 54-1 is assumed to be a cell which recognizes a displacement x shown in Fig.1. When there is an input corresponding to the displacement x in this case, the output cell 54-1 outputs an output signal, and the output conversion cell 55-1, which has received it, outputs an error signal y as an output signal from the neuro network.

The computer 30 reads a state of output of the output conversion cell, and calculates a difference between this and the instructor signal to determine the respective amplification factors of weight cells 51-1-1 to 51-ℓ-m and 53-1-1 to 53-m-n on the basis of the result. For the method for sampling the displacement, it may be uniformly divided into n pc.s with 0 displacement as the center, or it may be divided closely near 0 displacement and roughly for portions with a large displacement.

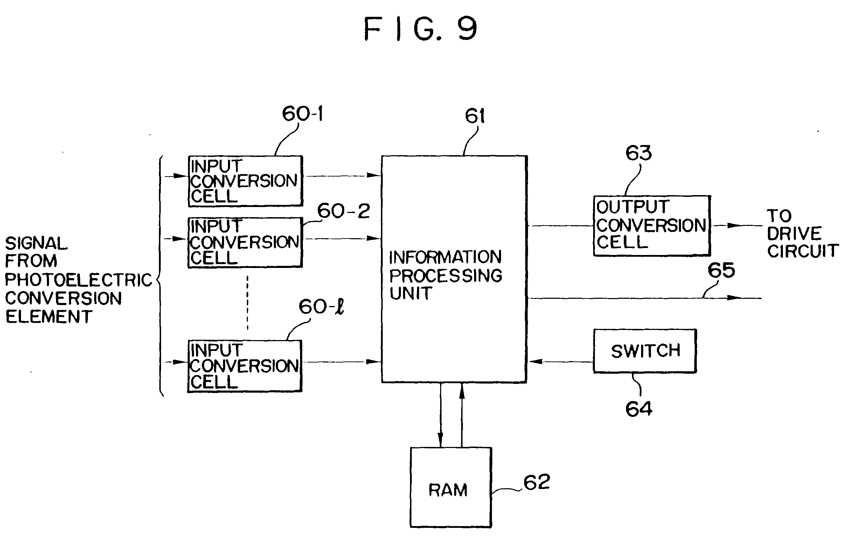

Fig.8 shows an embodiment, in which the neuro network has been constructed hardware-wise, and Fig.9 is an embodiment in which it has been constructed software-wise using a microcomputer.

In Fig.9, 60-1 to 60-ℓ are input conversion cells. To these ℓ pc.s of input conversion cells, electric signals, which have been photoelectrically converted by each element of the photoelectric conversion element 10 divided into ℓ pc.s are respectively given as mentioned above. In the input conversion cell, analog/digital conversion is performed, and the electric signal is read in by an information processing unit 61 consisting of a microcomputer. In the information processing unit 61, a process specified in Fig.8 is software-wise performed basically in accordance with the conventional back propagation method.

The weight of each cell is stored in a random access memory (RAM) 62. An output obtained in the information processing unit 61 is given to an output conversion cell 63 with an error signal for each displacement as a digital signal. In the output conversion cell 63, digital/analog conversion is performed to transmit its output to a drive circuit 12 in the actuator 3. The information processing unit 61 has at least learning and information processing modes in function, and these are switched by a switch 64.

When manufacturing and adjusting the light head, the learning mode is used, and the instructor signal is stored in the internal memory within the information processing unit 61 beforehand at this time. In this case, a displacement of the light spot from the track center position or the focused position is given by controlling the drive circuit 12 for the actuator and the position control unit 32 for controlling the position of the reference recording medium 31 through a signal 65, which is output from the information processing unit 61, and without using the computer 30 for learning shown in Fig.5.

No signal is output from the output conversion cell 63 at this time. Successively changing the displacement, read in an input signal therefore, and perform software-wise the operation shown in Fig.8 to compare the result with the instructor signal. Then, change the weight of each cell in accordance with the error between the result and the instructor signal to re-write the content of the RAM 62.

When the learning is complete, the switch 64 is switched to the information processing mode. Since the content of the RAM 62 has been maintained, an error signal to the input signal is calculated using the weight to output to the drive circuit 12. At this time, the signal 65 is not output from the information processing unit 61, but an error signal from the output conversion cell 63 is transmitted to the drive circuit 12 for the actuator. Accordingly the drive circuit 12 drives the actuator 3 in accordance with the error signal, and moves the objective lens 2 to correct the deviation of the light spot from the tracking and focusing directions.

The present invention can be applied in various ways in addition to the above-mentioned embodiments. For example, an apparatus for both recording and reproducing information has been described in the embodiment, but the present invention can be applied to an apparatus only for recording information or an apparatus only for reproducing information. In like wise, the neural network according to the present invention may be used for both tracking servo and focusing servo, and only for either of these servos. Also the neural networks for auto-tracking and auto-focusing may be separately provided, and may consist of one neural network.

Further, to amplify a change in light distribution on the multidivided photoelectric conversion element for the displacement or a change in the mount of light itself, such an optical filter as a knife edge and cylindrical lens may be disposed on the optical path.

In the above-mentioned embodiment, a configuration has been used in which an error signal is detected from light beam reflected by the recording medium. However, the present invention is not limited to this embodiment. When the medium is of the transmission type, the apparatus is so constructed that the light detector receives the light beam, which has permeated this medium, and a tracking/focusing error signal is induced from the output signal from this light detector using the neural network.

In all of the foregoing, the words "neuro network" will be understood to mean "neural network". Neural network, in this context, includes generally adaptive signal estimation apparatus or pattern recognition apparatus. The above described embodiment decribes a neural network trained according to a supervised learning algorithm. However, unsupervised learning neural networks are equally suitable, such as the self-organising networks described by Kohonen ("Clustering, Taxonomy and Topological Maps of Patterns", Proc. Int. Con on Pattern Recognition - October 1982).

It will be recognised that one type of neural network which may be employed is the well known multilayer perceptron trained according to the back propagation algorithm, and described for example in Rumelhart et al "Learning Internal Representation by Error Propagation", in "Parallel Distributed Processing; Explorations in the Microstructures of Cognition" Editors Rumelhart and McClelland, pages 318-362, Vol. 1, MIT Press 1986. This training method relies generally upon the well known "generalised delta rule" back propagation algorithm for adjustment of weights.

Many suitable arrangements of hardware for realising neural network are known. Firstly, as is well known, a single computing unit may effectively function as all of the "cells"; even though no parallel processing is employed, the technique is found more effective than conventional pattern recognition or estimation. Secondly, a plurality of discrete cells may be provided in the intermediate and output layers (or, in the case of a single layer network, in that layer). In an all digital embodiment, the input signals are first digitised and then fed to discrete digital processors which operate to multiply each by a stored weight, typically provided in a common RAM. In an all analogue embodiment, each cell comprises a multiplier followed by a non-linear element (in a multi-layer structure); the multiplier comprises a controllable multiplier (for example, an FET operating as a voltage control resistor), the multiplication or weighting factor being controlled by a weight (stored, for example, on a capacitor associated with the cell).

Finally, hybrid embodiments may be provided as discussed above in which weights are stored in a digital store, and each weight is supplied to a separate parallel processing element; each may comprise a multiplying digital analogue converter in which the digital weight is applied to the resistance ladder of the converter to produce an output which is a product of the weight and the input current. Each is followed, as above, by a non-linear element. Typically, the non-linear element is a signal function but a simple threshold may be employed.

Alternatively, as described above, the weights may be held digitally but converted to analogue form and multiplied by the input signal for each parallel processor for "element".

Neural networks of this type are found to be surprising effective since the underlying relationship between the error signal and displacement is, as shown in Figure 1, non-linear.

In the foregoing, the expression "pc.s" will be understood to mean "pieces" or "portions".

Finally, it will be noted that apparatus according to the invention may be supplied either as adaptive apparatus capable of training the neural network (in which case the "computer" 30 is provided), or as ready trained apparatus which therefore no longer needs to be adaptive.

## Claims

1. An apparatus for performing at least one of the recording of information and the reproduction of information by irradiating a recording medium (1) with a converged light beam, the apparatus comprising:
a light detector (10) comprising a plurality of photoelectric conversion elements for receiving a light beam transmitted through or reflected by the recording medium;
a circuit for producing at least one of a tracking error signal and a focusing error signal on the basis of the output signals of said plurality of photoelectric conversion elements, and
servo means for performing the function of at least one of a tracking servo and a focusing servo functions in accordance with the error signal induced by said circuit;
the apparatus being characterized in that said circuit includes a neural network (1) arranged to receive the output signals of said plurality of photoelectric conversion elements and arranged to output at least one of the tracking error signal and the focusing error signal, wherein said neural network (11) is arranged to compare said at least one of the tracking error signals and the focusing error signals with an instructor signal representing the desired tracking error or focus error signal and to perform a learning operation so that the compared signals coincide.

2. The optical information processing apparatus according to Claim 1, wherein:
said neural network (11) comprises a circuit for weighting the output for each of said plurality of photoelectric conversion elements, and a circuit for calculating the error signal by operating the plurality of weighted outputs.

3. The optical information processing apparatus according to Claim 2, wherein:
said light detector comprises ℓ portions of photoelectric conversion elements; and
said neural network (11) comprises;
memory means (40) for storing data on weights for weighting the output for each of the photoelectric conversion elements,
ℓ portions of input cells (50-1 to 50-ℓ) in which the output for each of said photoelectric conversion elements is input,
ℓ x m portions of first weight cells (51-1-1 to 51-ℓ-m) for weighting an output signal for each input cell (50-1 to 50-ℓ) in accordance with the data stored in the memory means (40),
m portions of intermediate cells (52-1 to 52-n) for operating the output signal for the first weight cell (51-1-1 to 51-ℓ-m),
m x n portions of second weight cells (53-1-1 to 53-m-n) for weighting an output signal for each intermediate cell (52-1 to 52n) in accordance with the data stored in the memory means (40),
n portions of output cells (54-1 to 54-n) for producing an output signal from the second weight cells (53-1-1 to 53-m-n), and
an output conversion cell (55-1 to 55-n) for converting the output signal from the output cells (54-1 to 54-n) into an error signal and transmitting to the servo means.

4. The optical information processing apparatus according to Claim 3, wherein each of each first (51-1-1 to 51-ℓ-m) and second (53-1-1 to 53-m-n) weight cells comprises an amplifier element which amplifies each signal by an amplification factor complying with the data stored in the memory means (40).

5. The optical information processing apparatus according to Claim 3, wherein said intermediate (52-1 to 52-m) and output cells (54-1 to 54-n) comprise non-linear elements which adds the signals for positive output signals from the weight cells (51-1-1 to 51-ℓ-m) and (53-1-1 to 53-m-n), deducts the signals for negative signals, and produces an output signal when the result exceeds a specified threshold value.

6. The optical information processing apparatus according to Claim 1, wherein:
said light detector (10) comprises a plurality of photoelectric conversion elements (60-1 to 60-ℓ); and
said neural network (11) comprises a microcomputer (61) for weighting the output for each of said plurality of photoelectric conversion elements (60-1 to 60-ℓ), and for operating the plurality of weighted outputs, and an output conversion cell (63) for converting the arithmetic output of this microcomputer (61) into an error signal and transmitting the error signal to the servo means.

7. The optical information processing apparatus according to Claim 6, wherein said neural network further comprises memory means (40) in which data concerning the weight for weighting the output has been stored.

8. The optical information processing apparatus according to Claim 6, wherein said neural network further comprises an input conversion cell (60-1 to 60-ℓ) which converts output signals from a plurality of photoelectric conversion elements into a digital signal and inputs into a microcomputer (61).

9. The optical information processing apparatus according to Claim 1, wherein said servo means comprises an actuator for changing the tracking and focusing states of said light beam, and a drive circuit for driving this actuator in accordance with an error signal.

10. A method of adjusting the apparatus recited in Claim 2, comprising the steps of:
(a) locating the recording medium (1) relative to the light beam in a predetermined relationship;
(b) comparing the error signal output from the neural network (11) with the instructor signal; and
(c) changing the weight given to the output of each of the plurality of photoelectric conversion elements in accordance with the comparison result in said comparing step.

11. The method of adjusting an optical information processing apparatus according to Claim 10, wherein said processes in steps (b) and (c) are repeated until the error signal coincides with the instructor signal.

12. The method of adjusting an optical information processing apparatus according to Claim 10, wherein said processes in steps (a) to (c) are performed with reference to each of a plurality different relative locations of the medium (1) and the light beam.

13. The method of adjusting an optical information processing apparatus according to Claim 10, wherein said method comprises the further steps of:
storing data on weights for weighting the signal; and
changing the weight given to the output for each of the plurality of photoelectric conversion elements by rewriting the stored data.

14. An apparatus for adjusting the apparatus recited in Claim 2 comprising:
means for changing the relative positions of the recording medium (1) and the light beam;
means for comparing the error signal output from the neural network (11) and the instructor signal; and
means for changing the weight given to the output of each of the plurality of photoelectric conversion elements in accordance with the comparison result.

15. The apparatus according to Claim 14, wherein said neural network (11) further comprises memory means (40), in which data on weights to be added to the signal has been stored, and said means for changing the weight changes the weight given to the output for each of the plurality of photoelectric conversion elements by rewriting the data stored in the memory means (40).

## Patentansprüche

1. Vorrichtung zur Durchführung von Aufzeichnung und/oder Wiedergabe von Informationen durch Bestrahlung eines Aufzeichnungsträgers (1) mit einem konvergierenden Lichtstrahl mit
einem Lichtdetektor (10) mit einer Vielzahl von photoelektrischen Wandlerelementen zum Empfang eines durch den Aufzeichnungsträger hindurchtretenden oder von dem Aufzeichnungsträger reflektierten Lichtstrahls,
einer Schaltung zur Erzeugung von einem Spurführungsfehlersignal und/oder einem Fokussierfehlersignal auf der Grundlage der Ausgangssignale der Vielzahl von photoelektrischen Wandlerelementen und
einer Servoeinrichtung zur Durchführung einer Spurführungsservo- und/oder einer Fokussierservo-Funktion entsprechend dem durch die Schaltung induzierten Fehlersignal,
**dadurch gekennzeichnet, daß**
die Schaltung ein neuronales Netzwerk (11) aufweist, das die Ausgangssignale der Vielzahl von photoelektrischen Wandlerelementen empfängt und das Spurführungsfehlersignal und/oder das Fokussierfehlersignal ausgibt, wobei das neuronale Netzwerk (11) das Spurführungsfehlersignal und/oder das Fokussierfehlersignal mit einem Vorgabesignal vergleicht, das das gewünschte Spurführungsfehler- oder Fokussierfehlersignal darstellt, und einen Lernvorgang derart durchführt, daß die verglichenen Signale übereinstimmen.

2. Optische Informationsverarbeitungsvorrichtung nach Anspruch 1, dadurch gekennzeichnet, daß
das neuronale Netzwerk (11) eine Schaltung zum Gewichten des Ausgangssignals für jedes der Vielzahl von photoelektrischen Wandlerelementen und eine Schaltung zum Berechnen des Fehlersignals durch Verarbeitung der Vielzahl der gewichteten Ausgangssignale umfaßt.

3. Optische Informationsverarbeitungsvorrichtung nach Anspruch 2, dadurch gekennzeichnet, daß
der Lichtdetektor ℓ Abschnitte von photoelektrischen Wandlerelementen umfaßt und daß
das neuronale Netzwerk (11)
eine Speichereinrichtung (40) zum Speichern von Daten über Gewichte zum Gewichten des Ausgangssignals für jedes der photoelektrischen Wandlerelemente,
ℓ Abschnitte von Eingangszellen (50-1 bis 50-ℓ), in die das Ausgangssignal für jedes der photoelektrischen Wandlerelemente eingegeben wird,
ℓ x m Abschnitte erster Gewichtszellen (51-1-1 bis 51-ℓ-m) zum Gewichten eines Ausgangssignals für jede Eingangszelle (50-1 bis 50-ℓ) entsprechend den in der Speichereinrichtung (40) gespeicherten Daten,
m Abschnitte von Zwischenzellen (52-1 bis 52-m) zur Verarbeitung des Ausgangssignals für die erste Gewichtszelle (51-1-1 bis 51-ℓ-m),
m x n Abschnitte zweiter Gewichtszellen (53-1-1 bis 53-m-n) zum Gewichten eines Ausgangssignals für jede Zwischenzelle (52-1 bis 52-n) entsprechend den in der Speichereinrichtung (40) gespeicherten Daten,
n Abschnitte von Ausgangszellen (54-1 bis 54-n) zur Erzeugung eines Ausgangssignals aus den zweiten Gewichtszellen (53-1-1 bis 53-m-n) und
eine Ausgangswandlerzelle (55-1 bis 55-n) zur Umsetzung des Ausgangssignals aus den Ausgangszellen (54-1 bis 54-n) in ein Fehlersignal und Übertragung zu der Servoeinrichtung umfaßt.

4. Optische Informationsverarbeitungsvorrichtung nach Anspruch 3, dadurch gekennzeichnet, daß jede der ersten (51-1-1 bis 51-ℓ-m) und zweiten (53-1-1 bis 53-m-n) Gewichtszellen ein Verstärkerelement umfaßt, das jedes Signal mit einem Verstärkungsfaktor verstärkt, der den in der Speichereinrichtung (40) gespeicherten Daten entspricht.

5. Optische Informationsverarbeitungsvorrichtung nach Anspruch 3, dadurch gekennzeichnet, daß die Zwischenzellen (52-1 bis 52-m) und Ausgangszellen (54-1 bis 54-n) nichtlineare Elemente umfassen, die die Signale für positive Ausgangssignale aus den Gewichtszellen (51-1-1 bis 51-ℓ-m) und (53-1-1 bis 53-m-n) addieren, die Signale für negative Signale abziehen und ein Ausgangssignal erzeugen, wenn das Ergebnis einen bestimmten Schwellwert überschreitet.

6. Optische Informationsverarbeitungsvorrichtung nach Anspruch 1, dadurch gekennzeichnet, daß
der Lichtdetektor (10) eine Vielzahl von photoelektrischen Wandlerelementen (60-1 bis 60-ℓ) umfaßt, und daß
das neuronale Netzwerk (11) einen Microcomputer (61) zum Gewichten des Ausgangssignals eines jeden der Vielzahl von photoelektrischen Wandlerelementen (60-1 bis 60-ℓ) und zur Verarbeitung der Vielzahl von gewichteten Ausgangssignalen sowie eine Ausgangswandlerzelle (63) zur Umsetzung des arithmetischen Ausgangssignals des Microcomputers (61) in ein Fehlersignal und Übertragung des Fehlersignals zu der Servoeinrichtung umfaßt.

7. Optische Informationsverarbeitungsvorrichtung nach Anspruch 6, dadurch gekennzeichnet, daß das neuronale Netzwerk desweiteren eine Speichereinrichtung (40) umfaßt, in die Gewichtsdaten zum Gewichten des Ausgangssignals eingespeichert sind.

8. Optische Informationsverarbeitungsvorrichtung nach Anspruch 6, dadurch gekennzeichnet, daß das neuronale Netzwerk desweiteren eine Eingangswandlerzelle (60-1 bis 60-ℓ) umfaßt, die Ausgangssignale aus einer Vielzahl von photoelektrischen Wandlerelementen in ein digitales Signal umsetzt und in einen Microcomputer (61) eingibt.

9. Optische Informationsverarbeitungsvorrichtung nach Anspruch 1, dadurch gekennzeichnet, daß die Servoeinrichtung ein Stellglied zum Verändern der Spurführungs- und Fokussierzustände des Lichtstrahls und eine Antriebsschaltung zum Antreiben dieses Stellgliedes entsprechend einem Fehlersignal umfaßt.

10. Verfahren zum Einstellen der Vorrichtung nach Anspruch 2 mit den Schritten
(a) Anordnen des Aufzeichnungsträgers (1) bezüglich des Lichtstrahls in einer vorbestimmten Beziehung,
(b) Vergleichen des Fehlerausgangssignals aus dem neuronalen Netzwerk (11) mit dem Vorgabesignal und
(c) Verändern des dem Ausgangssignal eines jeden der Vielzahl von photoelektrischen Wandlerelementen zugeordneten Gewichts entsprechend dem Vergleichs-Ergebnis bei dem Vergleichs-Schritt.

11. Verfahren zum Einstellen einer optischen Informationsverarbeitungsvorrichtung nach Anspruch 10, wobei die Verarbeitung in den Schritten (b) und (c) wiederholt wird, bis das Fehlersignal mit dem Vorgabesignal übereinstimmt.

12. Verfahren zum Einstellen einer optischen Informationsverarbeitungsvorrichtung nach Anspruch 10, wobei die Verarbeitung in den Schritten (a) bis (c) unter Bezugnahme auf eine jeweilige einer Vielzahl unterschiedlicher relativer Positionen des Aufzeichnungsträgers (1) und des Lichtstrahls durchgeführt wird.

13. Verfahren zum Einstellen einer optischen Informationsverarbeitungsvorrichtung nach Anspruch 10, wobei das Verfahren die weiteren Schritte
Speichern von Daten über Gewichte zum Gewichten des Signals und
Verändern des dem Ausgangssignal eines jeden der Vielzahl von photoelektrischen Wandlerelementen zugeordneten Gewichts durch erneutes Schreiben der gespeicherten Daten umfaßt.

14. Vorrichtung zum Einstellen der Vorrichtung nach Anspruch 2, gekennzeichnet durch
eine Einrichtung zum Verändern der relativen Positionen des Aufzeichnungsträgers (1) und des Lichtstrahls,
eine Einrichtung zum Vergleichen des Fehlerausgangssignals aus dem neuronalen Netzwerk (11) mit dem Vorgabesignal und
eine Einrichtung zum Verändern des dem Ausgangssignal eines jeden der Vielzahl von photoelektrischen Wandlerelementen zugeordneten Gewichts entsprechend dem Vergleichs-Ergebnis.

15. Vorrichtung nach Anspruch 14, dadurch gekennzeichnet, daß das neuronale Netzwerk (11) eine Speichereinrichtung (40) umfaßt, in der Daten über dem Signal hinzuzuaddierende Gewichte gespeichert sind, und daß die Gewichtsänderungseinrichtung das dem Ausgangssignal eines jeden der Vielzahl von photoelektrischen Wandlerelementen zugeordnete Gewicht durch erneutes Schreiben der in der Speichereinrichtung (40) gespeicherten Daten verändert.

## Revendications

1. Appareil pour effectuer au moins l'une des opérations comprenant l'enregistrement d'une information et la reproduction d'une information en irradiant un support d'enregistrement (1) avec un faisceau lumineux rendu convergent, l'appareil comportant :
un détecteur de lumière (10) comprenant plusieurs éléments de conversion photoélectrique destinés à recevoir un faisceau lumineux transmis à travers le support d'enregistrement ou réfléchi par celui-ci ;
un circuit destiné à produire au moins l'un d'un signal d'erreur de suivi et d'un signal d'erreur de focalisation sur la base des signaux de sortie desdits éléments de conversion photoélectrique, et
des moyens d'asservissement destinés à exécuter au moins l'une des fonctions d'asservissement de suivi et d'asservissement de focalisation en fonction du signal d'erreur induit par ledit circuit ;
l'appareil étant caractérisé en ce que ledit circuit comprend un réseau neuronal (1) agencé de façon à recevoir les signaux de sortie desdits éléments de conversion photoélectrique et agencé de façon à délivrer en sortie au moins l'un du signal d'erreur de suivi et du signal d'erreur de focalisation, ledit réseau neuronal (11) étant agencé de façon à comparer ledit ou chaque signal d'erreur de suivi et signal d'erreur de focalisation à un signal d'instruction représentant le signal souhaité d'erreur de suivi ou d'erreur de focalisation et à effectuer une opération d'apprentissage pour que les signaux comparés coïncident.

2. Appareil de traitement d'informations optiques selon la revendication 1, dans lequel :
ledit réseau neuronal (11) comporte un circuit destiné à pondérer le signal de sortie pour chacun desdits éléments de conversion photoélectrique, et un circuit destiné à calculer le signal d'erreur en opérant sur les différents signaux de sortie pondérés.

3. Appareil de traitement d'informations optiques selon la revendication 2, dans lequel :
ledit détecteur de lumière comporte ℓ parties d'éléments de conversion photoélectrique ; et
ledit réseau neuronal (11) comporte :
un moyen à mémoire (40) destiné à stocker des données de poids pour pondérer le signal de sortie de chacun des éléments de conversion photoélectrique,
ℓ parties de cellules d'entrée (50-1 à 50-ℓ) dans lesquelles le signal de sortie de chacun desdits éléments de conversion photoélectrique est introduit,
ℓ x m parties de premières cellules de poids (51-1-1 à 51-ℓ-m) destinées à pondérer un signal de sortie pour chaque cellule d'entrée (50-1 à 50-ℓ) en fonction des données stockées dans le moyen à mémoire (40),
m parties de cellules intermédiaires (52-1 à 52-n) destinées à opérer sur le signal de sortie pour la première cellule de poids (51-1-1 à 51-ℓ-m),
m x n parties de secondes cellules de poids (53-1-1 à 53-m-n) destinées à pondérer un signal de sortie pour chaque cellule intermédiaire (52-1 à 52-n) en fonction des données stockées dans le moyen de mémoire (40),
n parties de cellules de sortie (54-1 à 54-n) destinées à produire un signal de sortie pour les secondes cellules de poids (53-1-1 à 53-m-n), et
une cellule de conversion de sortie (55-1 à 55-n) destinée à convertir le signal de sortie des cellules de sortie (54-1 à 54-n) en un signal d'erreur et à le transmettre aux moyens d'asservissement.

4. Appareil de traitement d'informations optiques selon la revendication 3, dans lequel chacune des premières (51-1-1 à 51-ℓ-m) et secondes (53-1-1 à 53-m-n) cellules de poids comporte un élément amplificateur qui amplifie chaque signal par un facteur d'amplification conforme aux données stockées dans le moyen à mémoire (40).

5. Appareil de traitement d'informations optiques selon la revendication 3, dans lequel lesdites cellules intermédiaires (52-1 à 52-m) et de sortie (54-1 à 54-n) comprennent des éléments non linéaires qui additionnent les signaux dans le cas de signaux positifs de sortie des cellules de poids (51-1-1 à 51-ℓ-m) et (53-1-1 à 53-m-n), déduisent les signaux dans le cas de signaux négatifs, et produisent un signal de sortie lorsque le résultat dépasse une valeur de seuil spécifiée.

6. Appareil de traitement d'informations optiques selon la revendication 1, dans lequel :
un détecteur de lumière (10) comporte plusieurs éléments de conversion photoélectrique (60-1 à 60-ℓ) ; et
ledit réseau neuronal (11) comporte un micro-calculateur (61) destiné à pondérer le signal de sortie de chacun desdits éléments de conversion photoélectrique (60-1 à 60-ℓ), et à opérer sur les signaux de sortie pondérés, et une cellule (63) de conversion de signal de sortie destinée à convertir le signal arithmétique de sortie de ce micro-calculateur (61) en un signal d'erreur et à transmettre le signal d'erreur aux moyens d'asservissement.

7. Appareil de traitement d'informations optiques selon la revendication 6, dans lequel ledit réseau neuronal comporte en outre un moyen à mémoire (40) dans lequel des données concernant le poids destiné à pondérer le signal de sortie ont été stockées.

8. Appareil de traitement d'informations optiques selon la revendication 6, dans lequel ledit réseau neuronal comporte en outre une cellule de conversion d'entrée (60-1 à 60-ℓ) qui convertit des signaux de sortie provenant de plusieurs éléments de conversion photoélectrique en un signal numérique et applique celui-ci en entrée à un micro-calculateur (61).

9. Appareil de traitement d'informations optiques selon la revendication 1, dans lequel lesdits moyens d'asservissement comprennent un actionneur destiné à modifier les états de suivi et de focalisation dudit faisceau lumineux, et un circuit d'attaque destiné à attaquer cet actionneur en fonction d'un signal d'erreur.

10. Procédé de réglage de l'appareil selon la revendication 2, comprenant les étapes dans lesquelles :
(a) on positionne le support d'enregistrement (1) par rapport au faisceau lumineux dans une relation prédéterminée ;
(b) on compare le signal d'erreur sortant du réseau neuronal (11) au signal d'instruction ; et
(c) on modifie le poids donné au signal de sortie de chacun des éléments de conversion photoélectrique en fonction du résultat de la comparaison effectuée dans ladite étape de comparaison.

11. Procédé de réglage d'un appareil de traitement d'informations optiques selon la revendication 10, dans lequel lesdits processus des étapes (b) et (c) sont répétés jusqu'à ce que le signal d'erreur coïncide avec le signal d'instruction.

12. Procédé de réglage d'un appareil de traitement d'informations optiques selon la revendication 10, dans lequel lesdits processus des étapes (a) à (c) sont effectués en référence à chacun de plusieurs emplacements relatifs différents du support (1) et du faisceau lumineux.

13. Procédé de réglage d'un appareil de traitement d'informations optiques selon la revendication 10, dans lequel ledit procédé comprenant les autres étapes dans lesquelles :
on stocke des données de poids pour la pondération du signal ; et
on fait varier le poids donné au signal de sortie pour chacun des éléments de conversion photoélectrique en réécrivant les données stockées.

14. Appareil pour régler l'appareil selon la revendication 2, comportant :
des moyens destinés à modifier les positions relatives du support d'enregistrement (1) et du faisceau lumineux ;
des moyens destinés à comparer le signal d'erreur sortant du réseau neuronal (11) et le signal d'instruction ; et
des moyens destinés à modifier le poids donné au signal de sortie de chacun des éléments de conversion photoélectrique en fonction du résultat de la comparaison.

15. Appareil selon la revendication 14, dans lequel ledit réseau neuronal (11) comporte en outre un moyen à mémoire (40), dans lequel ont été stockées des données de poids devant être additionnés au signal, et lesdits moyens destinés à modifier le poids modifient le poids donné au signal de sortie de chacun des éléments de conversion photoélectrique en réécrivant les données stockées dans le moyen à mémoire (40).
